# FASCICULE DE BREVET EUROPEEN

(11) **EP 1 747 540 B1**
(45) Date de publication et mention de la délivrance du brevet: **05.09.2012**
(21) Numéro de dépôt: 05753622.9
(22) Date de dépôt: 06.04.2005
(51) Int. Cl.: G07D 7/20

(54) **PROCEDE DE RECONNAISSANCE ET DE SUIVI DE SUPPORTS FIBREUX, AINSI QUE LES APPLICATIONS D'UN TEL PROCEDE DANS LE DOMAINE INFORMATIQUE NOTAMMENT**
VERFAHREN ZUR ERKENNUNG UND ÜBERWACHUNG VON FASERHALTIGEN TRÄGERN UND ANWENDUNGEN DES VERFAHRENS IN DER INFORMATIONSTECHNOLOGIE
METHOD FOR THE RECOGNITION AND MONITORING OF FIBROUS SUPPORTS, AND APPLICATIONS OF SAID METHOD IN INFORMATION TECHNOLOGY

(30) Priorité: 11.05.2004 FR 0405066
(43) Date de publication de la demande: 31.01.2007
(73) Titulaire: Signoptic Technologies, 73370 le Bourget du Lac (FR)
(72) Inventeur: BOUTANT, Yann, 73100 Aix-les-Bains (FR); LABELLE, David, 69510 Soucieu en Jarrest (FR); SEUX, Hervé, Lexington, MA 02420 (US)
(74) Mandataire: Sarlin, Laure V.
(86) Numéro de dépôt international: PCT/FR2005/000840
(87) Numéro de publication internationale: WO 2005/122100

(56) Documents cités:
- EP-A- 0 570 162
- WO-A-03/052701
- US-A- 4 677 435
- US-B1- 6 565 002
- US-B1- 6 584 214

## Description

La présente invention concerne un procédé de reconnaissance et de suivi de supports fibreux, ainsi que les applications d'un tel procédé dans le domaine informatique notamment, et plus précisément pour un accès contrôlé à des informations sécurisées.

Les supports fibreux tels que les papiers, cartons, non-tissés sont utilisés quotidiennement comme supports d'informations, emballages de produits, produits techniques, .... Les supports fibreux constituent aujourd'hui des supports d'informations sensibles ou précieuses (billets de banque, chèques, pièces d'identité ...), sont utilisés dans des environnements sensibles (Etats, banques,...), d'autres sont les contenants de produits sensibles ou précieux (emballages, enveloppes,...), d'autres encore remplissent des fonctions techniques sensibles (filtration, conservation, ...).

Les procédés de l'art antérieur de reconnaissance ou d'authentification de matériaux fibreux, appliqués pour majorité aux papiers, se font le plus souvent par ajout d'éléments de sécurités tels que des éléments physiques (planchettes réactives ou non, fil de sécurité,...) et/ou de substances chimiques (réactifs) et des méthodes de fabrication particulières (filigranes, choix des fibres, texturisation, traitement de surface,...). Ces éléments de sécurité importés au matériau d'origine permettent de rendre plus difficile la contrefaçon du support fibreux, mais ne permettent pas de reconnaître individuellement chaque support et surtout multiplient considérablement les coûts de production de ce type de matériaux.

Le document US 6 584 214 décrit une méthode pour authentifier un élément ayant une structure interne pluridimensionnelle complexe, dans laquelle la structure tridimensionnelle contient par exemple des bulles, des cavités ou des particules fixées de manière permanente à une matrice polymérique.

Le document US 4 677 435 décrit un procédé d'identification d'un document, comprenant une étape consistant à balayer initialement la structure de grains microscopiques à l'intérieur du site du sceau formé dans le grain sur un document, et une étape consistant à balayer ultérieurement la structure de grains microscopiques et comparer les pixels de données obtenues lors de ces deux étapes pour déterminer s'il existe une corrélation entre les grains indiquant que le document balayé ultérieurement est le même document que le document balayé initialement.

La demande de brevet EP 1 202 225 propose d'utiliser les attributs physiques uniques d'un document, pour générer dans une première étape une clé associée au document qui est encodée sous la forme d'une image, elle-même imprimée sur le document. Pour vérifier l'authenticité d'un document, on génère dans une deuxième étape, dans les mêmes conditions qu'à la première étape, une clé qui est encodée sous la forme d'une image et l'on compare l'image obtenue à celle imprimée sur le document. Si l'image générée, lors de l'authentification est identique à celle imprimée sur le document, celui-ci est qualifié d'authentique, sinon il est qualifié de non-authentique.

Or, les inventeurs ont constaté que lorsqu'on se place dans des conditions « normales » d'utilisation du procédé, le document a pu être légèrement modifié, par exemple plié, perforé, imprimé... au cours de son utilisation, après enregistrement de la clé imprimée sous forme d'image sur ce dernier. De plus, le document reste « vivant » au cours de son utilisation et des variations d'environnement (humidité, lumière,...) peuvent légèrement faire varier ses dimensions ou sa coloration et par conséquent la clé générée et l'image associée.

Par ailleurs, les conditions d'extraction de la clé sont difficilement exactement reproductibles si l'on se sert de matériels différents d'acquisition ou d'illumination, par exemple.

Par conséquent, cette méthode d'authentification qui utilise une comparaison à l'identique ne peut être jugée satisfaisante, étant donné qu'elle élimine systématiquement tout document portant une image différente à celle obtenue lors de la vérification de l'authenticité, sans tenir compte des problèmes liés à la vie du document, ni à ceux liés à la reproductibilité des mesures.

Ayant constaté les lacunes des techniques de l'art antérieur existant dans le domaine de l'authentification de documents, les inventeurs proposent de fournir un procédé d'acceptation d'un support fibreux candidat, en papier, carton ou non tissé, en tant que support fibreux authentique, qui comprend les étapes suivantes :
- génération d'au moins une signature numérique authentique à partir d'une caractéristique structurelle extraite d'une zone de référence d'un support fibreux qualifié d'authentique, ladite signature numérique rendant compte de la structure fibreuse de la zone de référence, et enregistrement de celle-ci sur un support de données numériques,
- génération d'une signature numérique candidate à partir d'une caractéristique structurelle extraite d'une zone de référence du support fibreux candidat, ladite signature numérique rendant compte de la structure fibreuse de la zone de référence,
- comparaison de la signature numérique candidate à au moins une des signatures numériques authentiques préalablement enregistrées, de façon à émettre une décision positive ou négative d'acceptation du support fibreux candidat.
Dans le procédé selon l'invention :
- la caractéristique structurelle du support fibreux candidat et du(es) support(s) fibreux authentique(s) est obtenue en scrutant un volume du support,
- la comparaison détermine, selon une méthode statistique, un indice de similitude entre la signature numérique candidate et la signature numérique authentique, et compare cet indice de similitude avec un seuil d'acceptation donné, choisi pour permettre l'émission d'une décision positive d'acceptation dans des cas où la signature numérique candidate ne correspond pas exactement à la signature numérique authentique avec laquelle elle est comparée.

La méthode statistique utilisée va permettre, notamment, en fonction du seuil d'acceptation choisi et/ou de la mise en oeuvre d'un traitement numérique pour générer la signature numérique, de reconnaître un support fibreux qui a subi des modifications volontaires ou involontaires telles que de l'impression, de la perforation, des pliures, des tâches, ... au cours de son existence ou de son utilisation.

De façon avantageuse, le procédé d'acceptation selon l'invention présente une ou plusieurs des caractéristiques suivantes :
le seuil d'acceptation est choisi pour permettre l'émission d'une décision positive d'acceptation dans des cas où le support fibreux candidat est un support fibreux authentique, dont la zone de référence a subi des modifications entre l'enregistrement de la signature numérique authentique et la génération de la signature numérique candidate,
- le support fibreux candidat est un support fibreux authentique dont la zone de référence a subi des modifications entre l'enregistrement de la signature numérique authentique et la génération de la signature numérique candidate et une décision positive d'acceptation est émise ; notamment, le support fibreux candidat est un support fibreux authentique dont la zone de référence a subi une impression, perforation, découpe, pliage, écriture manuscrite, plastification, revêtement d'une piste magnétique, traitement de surface, coloration, imprégnation, embossage, et en particulier, une impression ou des perforations, entre l'enregistrement de la signature numérique authentique et la génération de la signature numérique candidate,
- la signature numérique candidate est générée en soumettant la caractéristique structurelle détectée à un traitement numérique complémentaire qui diminue l'impact des modifications intervenues sur la zone de référence entre l'enregistrement de la signature numérique authentique et la génération de la signature numérique candidate,
- la signature numérique candidate est générée en soumettant la caractéristique structurelle numérisée à un procédé d'érosion et/ou à un filtrage et/ou seuillage,
- la zone de référence du ou de(s) support(s) fibreux authentique(s) est (sont) tout ou partie d'un support fibreux vierge ou une partie vierge d'un support fibreux, et en particulier une feuille de papier vierge,
- la signature numérique authentique et la signature numérique candidate rendent compte de la structure chaotique, complexe, unique et quasi-invariante dans le temps de la zone de référence dont elles sont extraites,
- la caractéristique structurelle du(es) support(s) fibreux authentique(s) et du support fibreux candidat, détectée correspond à la porosité interne, à l'épair en transvision, ou à l'agencement tridimensionnelle du réseau fibreux à l'échelle microscopique ou macroscopique.
la caractéristique structurelle du(es) support(s) fibreux authentique(s) et du support fibreux candidat est obtenue par détection de l'interaction du support fibreux avec la lumière visible, par transvision,
- la caractéristique structurelle du(es) support(s) fibreux authentique(s) et du support fibreux candidat est soumise à au moins un traitement analogique ou digital, choisi parmi les filtres spatiaux ou fréquentiels, par exemple passe-haut, passe-bas, passe-bande, la transformée de Fourier, les transformées dites par ondelettes, des descripteurs, les algorithmes permettant d'analyser, et/ou de transformer et /ou de réorganiser et/ou de classer et/ou de seuiller les données brutes extraites de la ou des caractéristiques structurelles, les opérations de convolutions/déconvolutions, les opérations logiques et arithmétiques entre images et/ou signaux ; par exemple une transformée de Fourier d'un signal-image, notamment un algorithme de transformée de Fourier rapide (« FFT ») si le signal est de nature discrète, ou une lentille de Fourier si le signal est de nature optique pourra être utilisée.
- le seuil d'acceptation est choisi de façon à permettre l'émission d'une décision positive d'acceptation dans des cas où le support fibreux est un support fibreux authentique, bien que sa signature numérique ne corresponde pas exactement à la signature numérique authentique dudit support authentique à laquelle elle est comparée, à cause de différences dans les conditions d'obtention de la signature numérique, et en particulier de mesure de la caractéristique structurelle,
- la signature numérique candidate est comparée à plusieurs signatures numériques authentiques préalablement enregistrées dans une base de données,
- l'émission d'une décision positive d'acceptation s'accompagne de l'identification de la signature numérique authentique qui donne le meilleur indice de similitude,
- il comprend en outre une étape de calcul et d'émission d'un indice de confiance de la décision d'acceptation émise,
- les signatures numériques sont dynamiques et obtenues à partir de supports fibreux en défilement relatif à un capteur de mesure de la caractéristique structurelle.

Selon un autre de ses aspects, la présente invention a pour objet un dispositif adapté pour la mise en oeuvre du procédé d'acceptation tel que défini ci-dessus qui comprend :
- des moyens pour extraire par transvision une caractéristique structurelle d'une zone de référence d'un support fibreux candidat, rendant compte de la structure fibreuse de la zone de référence, qui comportent un capteur, tel qu'une caméra, CCD ou CMOS,
- des moyens de numérisation, et éventuellement de traitement/codage de la caractéristique structurelle mesurée en une signature numérique candidate,
- des moyens de calcul, selon une méthode statistique, d'un indice de similitude entre la signature numérique candidate et une signature numérique authentique préalablement enregistrée sur un support de données numériques,
- des moyens pour comparer l'indice de similitude obtenu avec un seuil d'acceptation donné, choisi pour permettre l'émission d'une décision positive d'acceptation dans des cas où la signature numérique candidate ne correspond pas exactement à la signature numérique authentique avec laquelle elle est comparée,
- des moyens d'émission d'une décision positive ou négative d'acceptation.

Les moyens de traitement de la caractéristique structurelle peuvent comprendre des algorithmes permettant de réduire l'impact de modifications, intervenues sur le support fibreux après la génération de sa signature numérique authentique et son enregistrement en tant qu'authentique, telles que impression, perforations, pliures, tâches, notamment des moyens de traitement par érosion, filtrage et/ou seuillage.

Selon un autre de ses aspects, l'invention propose de fournir des nouvelles solutions informatiques d'accès sécurisé, présentant un haut degré de sécurité, sécurité liée à la complexité et l'unicité de la structure des supports fibreux et une grande fiabilité grâce à la mise en oeuvre du procédé d'acceptation statistique décrit ci-dessus.

Aussi, l'invention a également pour objet un procédé pour effectuer un contrôle d'accès sécurisé et donner ou pas une autorisation d'accès, qui met en oeuvre un procédé d'acceptation ci-dessus défini, l'émission d'une décision positive d'acceptation conditionnant l'autorisation d'accès.

En particulier, l'invention prévoit dans le cadre d'applications particulières, du procédé d'acceptation dans des procédés de contrôle d'accès sécurisés à des informations sensibles, de comparer la signature numérique candidate à plusieurs signatures numériques authentiques, chaque signature numérique authentique ayant été préalablement associée par indexation à une information sensible et enregistrée dans une base de données, et d'accompagner l'émission d'une décision positive d'acceptation à l'identification de la signature numérique authentique donnant le meilleur indice de similitude, et à l'accès à l'information associée à ladite signature numérique authentique.

La présente invention sera mieux comprise à partir de la description faite ci-après, en référence aux figures annexées.

La **Fig. 1** illustre différentes étapes d'une variante du procédé selon l'invention.

La **Fig. 2** illustre une étape du procédé selon l'invention et montre les indices de similitude obtenus en comparant une signature numérique authentique (d'un papier authentique) enregistrée avec celle obtenu ultérieurement pour le même papier authentique, le même papier authentique modifié par impression et un papier différent.

La **Fig. 3** montre sous forme graphique différentes courbes de distribution du nombre d'échantillons (n) en fonction d'un indice de similitude (IS) calculé en utilisant le procédé de l'invention.

Un des objets de la présente invention est de fournir une méthode générale de reconnaissance d'un support fibreux, basée sur un test statistique de ressemblance entre une signature numérique extraite dudit support fibreux et une signature numérique d'un support fibreux « authentique » précédemment enregistrée sur un support de données numériques, et en particulier d'une base de données. La première étape du procédé consiste à détecter une caractéristique structurelle d'un support fibreux authentique, à générer une signature numérique authentique à partir de ladite caractéristique et à l'enregistrer et à la conserver de façon durable. La signature numérique authentique est enregistrée sur un support de données numériques et n'a pas besoin d'être imprimée sur le support fibreux authentique. Un support de données numériques, peut se trouver sous n'importe quelle forme d'unité de stockage de données informatiques. De la même façon plusieurs signatures numériques peuvent être générées à partir de différents supports fibreux authentiques et enregistrés, avantageusement dans une base de données Cette étape peut, par exemple être réalisée sur des supports fibreux vierges, avant qu'ils aient subi toute transformation. La seconde étape consiste à détecter, à nouveau, une caractéristique structurelle à partir d'un support fibreux candidat et à générer une signature, numérique candidate et à la comparer à la ou aux différentes signatures numériques authentiques préalablement enregistrées, afin de vérifier si le support fibreux candidat est reconnu en tant qu'authentique, malgré les modifications qu'il a pu subir. Enfin, en fonction du résultat de la comparaison, une décision positive ou négative du support fibreux candidat, en tant que support fibreux authentique est émise.

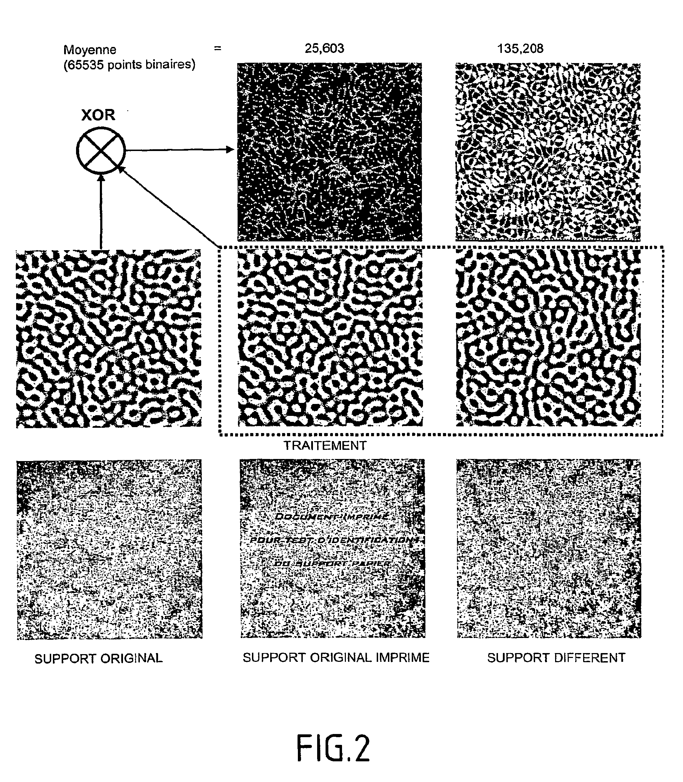

Les procédés de l'invention utilisent des signatures numériques obtenues à partir d'au moins une caractéristique structurelle d'un support fibreux en papier, carton ou non-tissé, sélectionné pour ses caractéristiques structurelles. Par conséquent, tous les procédés conformes à l'invention comportent au moins une étape d'obtention d'au moins une signature numérique à partir d'un support fibreux en papier, carton ou non-tissé, plus précisément une étape de détection d'au moins une caractéristique structurelle du matériau papier, carton, ou non-tissé, afin de générer au moins une signature numérique. Le support fibreux en papier, carton ou non-tissé utilisé présente une structure complexe, chaotique, unique et quasi-invariante dans le temps. Selon sa signification classique, une « signature numérique » d'une zone du support fibreux désigne une représentation, une caractérisation numérique qui est propre à la zone observée. Selon l'invention, une signature numérique est extraite de la structure du matériau constitutif du support fibreux, elle est obtenue à partir d'au moins une caractéristique du matériau rendant compte de sa structure. De façon avantageuse, la signature numérique présente un caractère aléatoire. Notamment, les signatures numériques peuvent se présenter sous la forme d'une image numérique de la structure de l'élément matériel, comme illustré **FIG. 2****.**

Par support fibreux en papier, carton ou non-tissé, on entend un élément physique en papier, carton ou non-tissé, cet élément physique peut se présenter sous de multiples formes_:_film, feuille,_boîte, enveloppe, carte...

La présente invention s'applique à n'importe quel type de papier, carton ou non-tissé, en fibres cellulosiques, de fibres de verre, de carbone, de plastique, de céramique, d'amiante, ou en mélange de telles fibres... éventuellement en combinaison avec des charges minérales et autres adjuvants (liants par exemple). Les papiers et cartons classiques en fibres cellulosiques sont préférés. Ces supports fibreux sont constitués d'un matériau poreux extrêmement complexe, anisotrope et hétérogène dans lequel les fibres peuvent être rassemblées en agrégats. De ce fait, tous ces supports fibreux, quels qu'ils soient, présente une structure fibreuse tridimensionnelle unique, complexe, chaotique et quasi-invariante dans le temps. Les supports fibreux sont produits généralement en bande continue et mis en forme typiquement en feuille, bien que d'autres formes existent également. Les supports fibreux en papier, carton ou non-tissé rassemblent des caractéristiques à la fois déterministes et à la fois aléatoires. Il conviendra, dans le cadre de l'invention d'en extraire au mieux la partie aléatoire. Ces supports fibreux, sont aussi en général noncopiables/non-reproductibles.

Les supports fibreux authentiques selon l'invention peuvent être quelconques, il n'est pas nécessaire qu'ils soient imprimés, ni qu'ils aient subi une transformation particulière. Le procédé selon l'invention est applicable à des supports fibreux, existants, transformés ou non, utilisés ou non. Le support fibreux n'a pas à être fabriqué exclusivement pour cet usage.

Les supports fibreux authentiques peuvent être un matériau sortant tout juste des chaînes de fabrication, une feuille vierge, un document imprimé, une enveloppe, une étiquette, une caisse en carton plat ou ondulé, une carte d'accès, une carte d'identité, un billet usagé... Tout type de papier est exploitable avec planchettes réactives ou non et/ou fils de sécurité et/ou substances physico-chimiques (réactifs) et/ou filigranes et/ou texture particulière et/ou traitement de surface et/ou coloration et/ou azurants... Mais, dans le cadre de l'invention, c'est la structure fibreuse du support fibreux qui est essentielle pour générer la signature numérique. Les supports fibreux authentiques peuvent être un support en défilement, dans ce cas, la signature numérique générée, comme expliqué ci-après, est « dynamique ».

Les supports fibreux en papier, carton ou non-tissé, et en particulier les supports papier, combinent une structure, largement complexe, un aspect chaotique à différentes échelles, une unicité de chaque endroit, et, si ils ne sont pas soumis à une agression extérieure exagérée pouvant entraîner une destruction totale de leur structure, ils possèdent une quasi-invariance dans le temps due à un vieillissement très lent dans des conditions extérieures normales. Par chaotique, on entend que leur structure fibreuse est non reproductible et non prévisible, aléatoire. Aussi, en examinant la structure d'une zone de référence d'un tel support fibreux, il est possible d'extraire une ou plusieurs caractéristiques rendant compte de la structure chaotique, complexe, unique et normalement assez stable de la zone scrutée. Le procédé selon l'invention utilise une caractéristique structurelle extraite pour générer, après numérisation et éventuellement traitement/codage, une ou plusieurs signatures numériques. Chaque signature numérique obtenue avec une zone de référence d'un support fibreux ne peut pas être obtenue avec un autre support fibreux, ni même avec une autre zone du même support fibreux. Bien entendu, la zone de référence dont on extrait la caractéristique structurelle peut s'étendre à l'ensemble du support fibreux.

Le papier, carton ou non-tissé est un matériau tri-dimensionnel et ne peut être réduit ou assimilé à une simple nappe ou une surface. De nombreuses propriétés fondamentales se développent dans son épaisseur, telles que la porosité / perméabilité, la compressibilité, la rigidité, ...L'unicité de la structure d'un tel matériau est garantie par l'enchevêtrement aléatoire sur plusieurs épaisseurs de fibres élémentaires ayant elles-mêmes subi un traitement physico-chimique préalable à leur mise en oeuvre. La structure même de ce réseau est l'élément le plus permanent d'un matériau papier, carton ou non-tissé et elle ne peut être détruite sans détruire le matériau lui-même. Au sens de l'invention, on extrait une caractéristique structurelle du matériau fibreux, c'est-à-dire une caractéristique qui représente l'agencement chaotique interne du matériau. En scrutant la structure du matériau et donc en observant un volume de ce dernier, on garantit la quasi-invariance de la caractéristique structurelle extraite. De plus, la caractéristique structurelle détectée, vu qu'elle donne les propriétés du matériau sur une certaine profondeur, permet d'extraire une information complexe. On retrouve dans la caractéristique structurelle extraite et dans la signature numérique générée le caractère complexe, chaotique, unique et quasi-invariante dans le temps de la structure du matériau, constitutif du support fibreux.

La détection de caractéristiques de surface d'un papier, carton ou non-tissé est inadaptée dans la pratique dans les applications visées par la présente invention car :
- l'état de surface d'un papier, carton ou non-tissé peut être modifié aisément volontairement ou involontairement, en le lissant (avec l'ongle par exemple), en l'embossant (marquage mécanique en surface), ... ; ces modifications interdisent toute tentative de récupérer de l'information pertinente du support fibreux candidat ; alors que la structure volumique du matériau après ces transformations reste quasi-inchangée...
- les transformations de type impression, perforations, écriture, ... altèrent davantage les caractéristiques surfaciques du matériau que ses caractéristiques volumiques,
- il est impossible pratiquement de plastifier un matériau papier, carton ou non-tissé et de retrouver des caractéristiques surfaciques initiales, alors que la structure interne volumique reste accessible et intacte ; et pourtant la plastification est un moyen simple et efficace de protéger et donc augmenter la durée de vie d'un matériau fibreux.

Aussi, dans le cadre de l'invention, on ne se limite pas à détecter un état de surface de la zone de référence, mais est au contraire, une caractéristique représentative de la structure fibreuse tridimensionnelle sur un certain volume, une certaine épaisseur. La structure fibreuse d'un support fibreux peut être scrutée selon de multiples façons, en observant un volume du support fibreux : porosité interne, épair en transvision, agencement tridimensionnelle du réseau fibreux à l'échelle microscopique ou macroscopique, coloration ou impression mettant en relief la structure interne du matériau, traceur optique, magnétique, physique porté par la structure fibreuse qui sont autant de caractéristiques uniques pouvant être extraites. Il est également possible d'observer conjointement différentes propriétés du support fibreux. Par exemple, dans le cas d'un papier de sécurité, il est possible de détecter d'une part l'épair en transvision et d'autre part les éléments particuliers embarqués dans le papier.

La mesure d'une telle caractéristique structurelle d'un support fibreux rendant compte de sa structure chaotique, complexe, unique et quasi-invariante, sa numérisation, suivie éventuellement d'un traitement numérique pour obtenir une signature numérique peuvent être effectuées de différentes façons. En général, la caractéristique est mesurée sur une zone de référence, correspondant à une partie localisée du support fibreux ou à la totalité du support fibreux.

La caractéristique structurelle est généralement extraite avec un capteur de mesure qui permet d'obtenir une représentation, une caractérisation de l'agencement interne du support fibreux, sur un volume de ce dernier. Il est, par exemple, possible d'utiliser des méthodes sans contact (optiques et/ou électromagnétiques) dans lesquelles une onde ou rayonnement électromagnétique interagit par réflexion et/ou absorption et/ou transmission et/ou diffusion et/ou réfraction et/ou diffraction et/ou interférence avec le support fibreux qui mettent en oeuvre un capteur optique/électronique pour réaliser la mesure et l'acquisition voire la numérisation. Le ou les capteurs mis en oeuvre alors peuvent être placés dans toute position par rapport au support fibreux observé, et par rapport à la ou aux sources de rayonnement. Typiquement les rayonnements utilisés peuvent être la lumière visible et/ou infrarouge (IR) et/ou ultraviolet (UV) et/ou laser ou rayons bêta et/ou gamma et/ou X et/ou autre. Le choix du ou des rayonnements et du ou des capteurs utilisés peut être influencé par l'application du procédé, le type de support fibreux sélectionné, l'échelle de mesure choisie, le coût de la mise en oeuvre... Le ou les capteurs utilisés peuvent être fixes par rapport à la source et/ou au support fibreux ou en mouvement relatif. De façon avantageuse, la détection/numérisation de la caractéristique structurelle est obtenue par détection de l'interaction du support fibreux avec la lumière visible, par transmission, notamment au moyen d'un capteur, tel qu'une caméra, CCD ou CMOS.

Il est également possible d'utiliser des méthodes avec contact entre le support fibreux et le ou les capteurs de mesure. Le capteur est alors du type palpeur, intégrant éventuellement, en plus de la dimension mécanique, des dimensions électromagnétiques (comportement magnétique) ou autres. Dans ce cas, un mouvement relatif du palpeur et du support fibreux est nécessaire. Une autre alternative est d'utiliser le support fibreux comme support d'une onde ultrasonique ou d'une autre sollicitation (électrique, thermique, chimique, biologique, ...) et d'enregistrer dans différentes orientations le comportement, c'est-à-dire la réponse du support fibreux soumis à cette onde, de la sollicitation appliquée.

Les matériaux fibreux peuvent être en mouvement relatif par rapport au capteur (par exemple bobine de papier en déroulement devant une caméra fixe, ou disque de papier en rotation avec capteur en déplacement radial,...) : la caractéristique structurelle est alors mesurée en continu, de façon à générer une signature numérique « dynamique ».

L'extraction de caractéristiques structurelles du support fibreux peut se faire à une ou plusieurs échelles, du niveau microscopique au niveau macroscopique, c'est à dire de 1 µm à plusieurs cm en général, voire d'autres échelles. Il est possible de scruter sa structure par transvision, , et ce au niveau des fibres, éléments de 100 µm à quelques mm de longueur et environ 10 à 20 µm de largeur dans le cas du papier, ou encore au niveau des agrégats de fibres, typiquement de l'ordre de 1 à 10 mm² dans le cas du papier. La complexité de la signature numérique est dépendante des échelles, des orientations qui sont donc choisies en fonction de l'application visée.

La détection, sur le support fibreux, d'une caractéristique structurelle qui reflète sa structure complexe et unique, est réalisée en scrutant un volume du support et après numérisation, la caractéristique structurelle numérisée peut être sous forme 1D, 2D ou 3D. Les caractéristiques structurelles représentent la structure du matériau constitutif de la zone de référence du support fibreux. Comme dit précédemment, elles sont obtenues par observation de caractéristiques internes, et éventuellement de surface sur un volume de ce dernier. La détection peut également se faire indépendamment du temps ou « en temps réel ». Dans ce dernier cas, la caractéristique structurelle est échantillonnée dans le temps. De même, on peut ajouter des dimensions à cette phase de détection, en observant le support fibreux sous différentes orientations ou illuminations, en couleur, niveaux de gris, sous forme binaire. L'image considérée peut aussi être une image, réelle ou complexe (amplitude et phase) au sens du traitement et de l'analyse d'image.

La ou les signatures numériques mises en oeuvre dans le procédé de l'invention correspondent à une telle caractéristique structurelle numérisée, soumise éventuellement à un traitement numérique ou codage selon un ou plusieurs algorithmes. De façon classique, par numérique, on entend une représentation d'informations ou de grandeurs physiques sous forme de tout type de signaux (dont des images réelles ou complexes, des composantes amplitude et/ou phase) à valeurs discrètes, par exemple sous forme de chiffres (dans quelque base que ce soit : binaire, décimale, hexadécimale, ...) ou sous forme d'un ensemble quelconque de symboles (alphabet, grammaire prédéfinie, ...). Les systèmes numériques ont souvent recours aux convertisseurs analogique-numérique ou numérique-analogique. Aussi, une telle signature numérique se présente, par exemple, sous une forme binaire, sous la forme d'une ou plusieurs images en couleur ou en niveaux de gris, d'une ou plusieurs images, réelles ou complexes.

L'acquisition et la mise en forme/conditionnement voire la numérisation d'une ou plusieurs caractéristiques structurelles du support fibreux est réalisée grâce à un ou plusieurs capteurs avec ou sans contact avec le support fibreux. Ces capteurs sont classiquement suivis d'une unité de traitement analogique (optique ou électronique par exemple) ou numérique (carte d'acquisition branchée à une plate-forme quelconque informatique ou automatique).

Une ou plusieurs signature(s) numérique(s) sont générées à partir des caractéristiques structurelles extraites et mises en forme / conditionnées. Un codage (sous forme analogique et/ou numérique) peut être réalisé suivi ou précédé par une numérisation si les caractéristiques structurelles extraites ne sont pas déjà sous forme numérique, la nature de ces traitements peut varier en fonction du type de support fibreux choisi et de l'application pour laquelle le procédé est mis en oeuvre.

Pour générer, à partir des caractéristiques structurelles, détectées une ou plusieurs signatures numériques, de nombreuses méthodes sont elles aussi envisageables, et il n'est pas raisonnable de vouloir toutes les citer. Les techniques données ci-après ne constituent donc nullement une liste exhaustive.

Les caractéristiques structurelles sont avantageusement soumises à un traitement analogique, ou à un traitement numérique effectué alors après numérisation. Les méthodes connues en traitement et analyse du signal ou de l'image sont bien naturellement directement mobilisables. Les traitements électroniques ou algorithmiques utilisés alors s'appuient, sous forme analogique ou digitale, sur des filtres spatiaux et/ou fréquentiels (passe-haut, passe-bas, passe-bande,...), et/ou la transformée de Fourier, et/ou les transformées dites par ondelettes, et/ou des descripteurs, et plus généralement, tout type d'algorithme permettant d'analyser, et/ou de transformer et /ou de réorganiser et/ou de classer et/ou de seuiller les données brutes (dont des signaux et des images) extraites de la ou des caractéristiques structurelles. Les opérations de convolutions/déconvolutions, ainsi que les opérations logiques et arithmétiques entre images et/ou signaux peuvent être mises en oeuvre pour l'obtention desdites signatures. A titre illustratif, la transformée de Fourier d'un signal-image pourra être mise en oeuvre, soit au moyen d'un algorithme de transformée de Fourier rapide (« FFT ») si le signal est de nature discrète, soit au moyen d'une lentille de Fourier si le signal est de nature optique.

Quel que soit le codage ou le traitement que l'on fait subir à la caractéristique structurelle, la signature numérique obtenue reflète la structure fibreuse chaotique de la zone de référence dont elle a été extraite. Si la caractéristique structurelle numérisée se trouve sous la forme d'une image en niveau de gris obtenue par caméra CCD et qu'on choisit de la binariser, on va certes perdre de l'information, donc du pouvoir de discrimination lors de la décision d'acceptation, mais on va gagner en rapidité de calcul et en temps d'accès aux différentes signatures. Un compromis est donc à trouver et à choisir en fonction des applications faites du procédé d'acceptation selon l'invention. Il est bien clair que toute la valeur de l'invention se révèle en utilisant une ou des signatures numériques qui conservent un caractère aléatoire et complexe caractéristique de la structure unique et stable du matériau, dans la zone de référence, malgré le traitement appliqué aux caractéristiques structurelles utilisées pour générer la signature numérique.

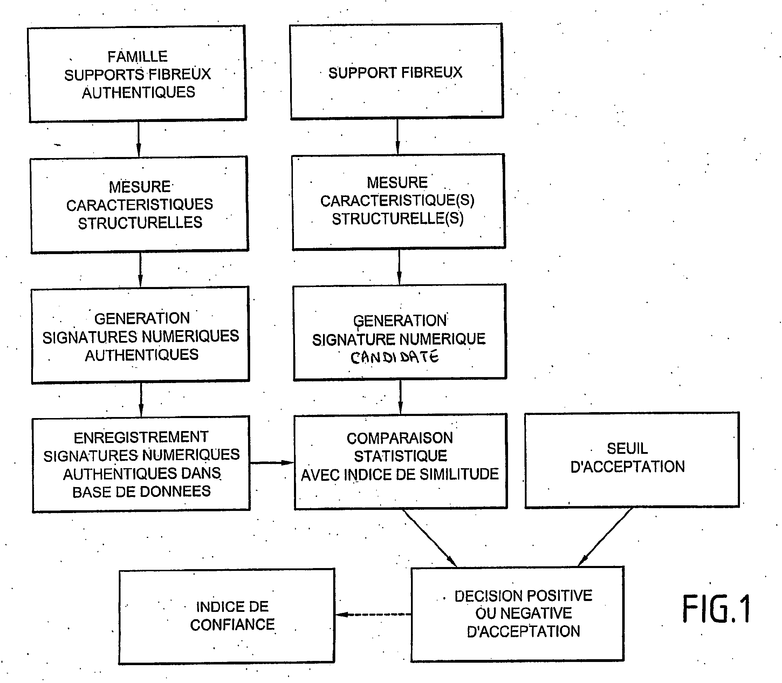

La mesure d'une caractéristique structurelle d'un support fibreux et son codage/numérisation en une signature numérique sont mis en oeuvre dans les deux phases essentielles du procédé, comme illustré Fig.1 : tout d'abord, lors de la constitution d'une signature numérique authentique ou d'une famille de signatures numériques authentiques, à partir d'un ou d'une famille de supports fibreux qualifiés d'authentiques, et ensuite lors de l'obtention de la signature numérique candidate du support fibreux candidat soumis au procédé d'acceptation. Bien entendu, il est important que les procédés de mesure et de codage mis en oeuvre dans ces deux phases du procédé soient analogues, c'est-à-dire qu'ils reprennent les mêmes étapes essentielles. Plus précisément, compte tenu de l'unicité de la structure, la mesure « authentique » et la mesure ultérieure de la caractéristique structurelle doivent être effectuées sur deux zones de référence, qui présentent au moins une partie commune, et qui seront avantageusement localisées au même endroit sur le support : celle-ci peut être localisée de façon précise par une délimitation ou protection plastique par exemple, ou correspondre à la totalité du support. La même caractéristique structurelle doit être mesurée. Avantageusement, les procédés de codage éventuellement mis en oeuvre doivent être les mêmes. Néanmoins, l'obtention d'une signature numérique candidate peut mettre en oeuvre des traitements numériques complémentaires, visant à supprimer certaines modifications apportées au support fibreux, après enregistrement de sa signature numérique en tant qu'authentique. Ce dernier point sera détaillé par la suite.

Par ailleurs, les conditions de mesure de la caractéristique structurelle (atmosphère, taux d'humidité, illumination, orientation du support fibreux par rapport aux capteurs, dispositifs utilisés...) dans les deux phases du procédé (mesure « authentique » et mesure « candidate ») seront difficilement identiques. De plus, les procédés de mesure et numérisation mis en oeuvre sur les supports fibreux authentiques et sur les supports fibreux candidats peuvent être légèrement différents, notamment les réglages de l'appareillage peuvent différer.

Par conséquent, dans la plupart des cas, la signature numérique d'un support fibreux testé, bien que correspondant exactement à un support fibreux authentique ayant servi à générer une signature numérique authentique, ne correspondra pas exactement à ladite signature numérique authentique.

De plus, certes les structures fibreuses ne se modifient pas ou peu dans le temps et l'espace, et si l'on mesure certaines caractéristiques structurelles à un moment donné, on est capable de retrouver sinon intactes, très similaires ces mêmes caractéristiques à un autre moment ultérieur. Néanmoins, entre l'enregistrement de sa signature numérique authentique et sa soumission ultérieure au procédé d'acceptation, un support fibreux peut subir des :
- transformations intentionnelles : impression par tout moyen, perforation et microperforations par tout moyen, découpe, pliage, collage, écriture manuscrite ou dessin, plastification, revêtement d'une piste magnétique ou autre traitement de surface, coloration, imprégnation par toute substance dont résine, complexage avec autres matériaux, embossage,...
- transformations non-intentionnelles induites par une agression extérieure : tâches, salissures, vieillissement, variations dimensionnelles dues notamment à la température, l'hygrométrie, déchirures, plis...

De sorte que la signature numérique d'un support fibreux obtenue après ces modifications ne correspondra pas à la signature authentique enregistrée obtenue avant modification avec ce même support.

Certes, il est possible d'envisager de protéger un support fibreux d'éventuelles agressions extérieures (rayures, perforations, détériorations optiques, ...) afin de maintenir le plus possible sa quasi-invariance. Cette protection peut se réaliser en insérant le support fibreux de manière définitive dans une enveloppe externe ou une résine n'empêchant en rien l'accès à ses caractéristiques internes. Cette enveloppe externe peut en plus du support fibreux proprement dit contenir d'autres éléments (une photographie par exemple dans le cas d'une carte d'identité), et adhérer intimement au papier de telle façon que l'ouverture de cette enveloppe entraîne la destruction de tout ou partie du support fibreux. Le type de protection à apporter au papier est fonction de l'application choisie (lecture fréquente dans le cas d'une carte d'accès, sensibilité de l'application, ...). Néanmoins, la présence de cette enveloppe plastique modifie la caractéristique structurelle détectée du support fibreux et donc sa signature numérique.

Le procédé d'acceptation selon l'invention permet, malgré ces différentes modifications intervenues entre l'enregistrement de la signature numérique authentique d'un support fibreux et la génération d'une signature numérique candidate de ce même support dont la zone de référence a subi des transformations, de le reconnaître en tant que support fibreux authentique.

Aussi, une des caractéristiques essentielles de la présente invention est de réaliser un test statistique de similitudes entre une signature numérique d'un support fibreux candidat à l'acceptation et une signature authentique précédemment enregistrée. La puissance de cette méthode est de pouvoir affirmer si le support fibreux candidat peut ou ne peut pas être considéré comme authentique et peut permettre, par le biais d'un indice de confiance, de quantifier la probabilité d'avoir fait une erreur sur la décision (par exemple, ce papier est considéré comme authentique avec une probabilité d'avoir fait une erreur de 1/1000000). Il est donc possible de constituer une base de données initiale avec des supports fibreux authentiques quelconques, et de faire appel à celle-ci tout au long de la vie des supports fibreux et/ou de leur transformation. La base de données des signatures authentiques peut, en plus, contenir tout type d'information, dont les paramètres de réglages, seuils, indice de confiance, échelle observée,... Le degré de tolérance du procédé selon l'invention permet de confirmer l'identité d'un support papier ayant été transformé, postérieurement à son enregistrement en tant qu'authentique, notamment imprimé, plastifié, découpé. Cette sensibilité statistique donne, de plus, une plus grande tolérance au mode d'extraction de la caractéristique structurelle numérique considéré, qui peut dès lors être réalisé avec des dispositifs différents à des moments différents, et à moindre coût.

De plus, avec le procédé selon l'invention, la zone de référence et en particulier sa structure, peut être modifiée entre la génération de la signature authentique et l'obtention de la signature candidate. Le procédé selon l'invention peut être mis en oeuvre avec un support fibreux candidat dont la zone de référence est différente de la zone de référence d'un support fibreux authentique dont la signature authentique est enregistrée. Avantageusement, ce dernier sera reconnu en tant que support fibreux authentique, si sa zone de référence présente au moins 0,1 mm³, par exemple une surface de 1mm² sur une épaisseur d'environ 100µm, commune et inchangée avec la zone de référence ayant servi à générer la signature numérique authentique.

Différentes méthodes statistiques de calcul d'indices de similitude peuvent être utilisées en fonction de la nature de la signature numérique : on peut citer la corrélation d'entropie locale d'images, la corrélation d'images, distance de Hamming d'images binaires, des distances euclidiennes... Le seuil d'acceptation choisi comme critère de décision est une valeur limite d'indice de similitude, déterminant la limite entre les supports fibreux candidats qui vont être acceptés et donc considérés comme authentiques, et ceux qui vont être refusés et donc considérés comme imposteurs. Quatre familles d'occurrence apparaissent alors en fonction de ce critère de décision choisi :
1- Authentiques Acceptés (AA)
2- Imposteurs Acceptés(IA)
3- Authentiques Rejetés(AR)
4- Imposteurs Rejetés(IR)

Le critère de décision peut donc être choisi de façon à maximiser les quantités AA et IR, et minimiser les quantités IA et AR. Le critère de décision peut être ajusté en fonction du degré de sécurité souhaité dans l'application visée : la question qui se pose est de savoir, si dans l'application visée, il est préférable de refuser des authentiques ou d'accepter des imposteurs.

On peut de plus établir une quantification de la probabilité d'occurrence de chacun des évènements AA, IA, AR et IR, ce qui permet d'élaborer une stratégie de définition du critère de sélection en fonction de la probabilité d'occurrence d'un ou plusieurs évènements ci-dessus. Le seuil d'acceptation est de toute façon choisi de façon à permettre l'émission de décision positive d'acceptation dans des cas où la signature numérique candidate ne correspond pas exactement à la signature numérique authentique à laquelle elle est comparée. Dans le cadre de l'invention, le seuil d'acceptation est, de préférence, choisi de façon à accepter en tant qu'authentique, des supports fibreux ayant servi à générer les signatures numériques authentiques, mais dont la zone de référence a, depuis, subi des modifications, notamment une impression, perforation, découpe, pliage, écriture manuscrite, plastification, revêtement d'une piste magnétique, traitement de surface, coloration, imprégnation, embossage.

Par ailleurs, il est également possible, lors de la génération de la signature numérique candidate, de soumettre la caractéristique structurelle numérisée à un traitement numérique visant à éliminer ou diminuer l'impact des modifications. Dans le cas d'une impression, un traitement supplémentaire par un procédé d'érosion au sens du traitement de l'image pourra être envisagé. Un filtrage pourra également être réalisé dans le traitement de façon à éliminer le texte. Dans le cas d'une perforation, un filtrage, par exemple avec un filtre passe-bande et/ou un seuillage peut constituer le pré-traitement. Néanmoins, après filtrage, la signature numérique d'un support fibreux imprimé ne correspondra pas exactement à sa signature numérique obtenue avant impression.

Le seuil d'acceptation et le traitement éventuel sont choisis en fonction des transformations que la zone de référence du support est susceptible de subir.

La Fig. 2 illustre, par un exemple simple, l'intérêt du procédé de reconnaissance de support fibreux selon l'invention. On choisit une méthode d'acquisition de la caractéristique (vue en transvision en lumière du jour) une méthode de codage (filtre passe bande dans ce cas) et un indice de similitude (moyenne arithmétique du XOR de deux images binaires) pour réaliser les comparaisons. L'image en transvision d'une zone d'un papier vierge authentique est enregistrée sous forme numérique sur un ordinateur. Le papier vierge est par la suite imprimé et devient donc un document. On choisit alors un autre papier vierge différent. On réalise l'acquisition de la caractéristique du papier authentique imprimé, on réalise un pré-traitement pour gommer l'effet de l'impression (érosion au sens du traitement de l'image), on code et on compare cet échantillon selon les méthodes choisies avec la caractéristique enregistrée, on obtient un indice de similitude de 25,603. On réalise les mêmes opérations d'acquisition de caractéristique, de codage (pré-traitement inutile dans ce cas, car pas imprimé) avec un support papier vierge différent, et on le compare de manière similaire avec la caractéristique du support authentique enregistrée : on obtient un indice de similitude de 135,208. En choisissant un seuil d'acceptation de 50 par exemple, on peut discriminer aisément le support papier authentique, même transformé (indice de similitude inférieur au seuil choisi) du support papier différent/imposteur (indice de similitude supérieur au seuil choisi).

Pour choisir le seuil d'acceptation, on détermine le type de signatures différentes que l'on souhaite acceptées : différences dues à des conditions différentes pour générer la signature numérique et/ou différences dues à des transformations ou modifications intervenues sur la zone de référence. Le seuil d'acceptation sera, de préférence choisi, de façon à accepter dans au moins 99% des cas, de préférence dans au moins 99,9% des cas, et préférentiellement dans au moins 99,99% des cas, les signatures différentes que l'on souhaite accepter, qui, bien qu'elles soient différentes des signatures numériques authentiques enregistrées correspondent à un support fibreux authentique.

Le procédé selon l'invention est exploitable dans tout type de machine existante, par exemple imprimantes, fax, photocopieur, scanner... permettant de transmettre de l'information numérique et/ou de la stocker et/ou de la reproduire. En particulier, le dispositif comprend :
- des moyens pour extraire une caractéristique structurelle d'une zone de référence d'un support fibreux candidat, rendant compte de la structure unique, complexe, chaotique, et quasi-invariante dans le temps de la zone de référence, et notamment un capteur tel qu'une caméra CDD ou CMOS,
- des moyens de numérisation, et éventuellement de traitement/codage de la caractéristique structurelle mesurée en une signature numérique candidate qui peuvent inclure des algorithmes permettant de réduire l'impact de modifications intervenues sur la zone de référence telles que impression, perforations, pliures, tâches, ...,
- des moyens de calcul, selon une méthode statistique, d'un indice de similitude entre la signature numérique candidate et une signature numérique authentique préalablement enregistrée sur un support de données numériques,
- des moyens pour comparer l'indice de similitude obtenu avec un seuil d'acceptation donné, de façon à permettre l'émission d'une décision positive d'acceptation dans des cas où la signature numérique ne corresponde pas exactement à la signature numérique authentique à laquelle elle est comparée,
- des moyens d'émission d'une décision positive ou négative d'acceptation.

Le procédé d'acceptation selon l'invention peut être utilisé dans différentes applications. Bien entendu, il pourra être utilisé pour vérifier l'intégrité ou l'authenticité de documents porteurs d'informations sensibles ou précieuses.

Ensuite, le procédé de l'invention est particulièrement utile pour la traçabilité de supports fibreux. Il peut notamment permettre de suivre la vie d'un support fibreux, et en particulier d'un papier, de sa sélection en tant que support authentique à son utilisation, en passant par des étapes de transformation (impression, gravure, perforation, pliage, découpage,...). A différents stades de son existence, il sera possible de générer à partir dudit support une signature numérique candidate pour vérifier son authenticité. Le procédé selon l'invention avec seuil d'acceptation autorise une telle traçabilité, contrairement à une méthode basée sur la comparaison à l'identique. Une base de données de signatures numériques authentiques de supports authentiques vierges (feuilles ou cartes ou enveloppes ou emballages ou autre) peut être constituée. Ensuite, des signatures numériques candidates obtenues à partir de supports ayant subi des transformations ultérieures d'usage, par exemple, peuvent être comparées aux signatures numériques authentiques enregistrées dans la base de données.

Une autre application consiste à unir de manière physique le support fibreux à un produit, un objet, voire un être vivant, et de s'en servir comme étiquette. Le suivi direct du support fibreux grâce au procédé de l'invention permet de suivre indirectement le produit, l'objet ou l'être vivant. La liaison physique doit être telle que toute tentative de séparation du support fibreux d'avec le produit, l'objet ou l'être vivant se solde par une destruction de l'étiquette, par exemple une déchirure non réparable, dans le cas d'un papier associé par adhésif.

D'autres applications essentielles du procédé d'acceptation selon l'invention relèvent du domaine des procédés de contrôle d'accès sécurisés. L'invention a également pour objet un procédé pour effectuer un contrôle d'accès sécurisé et donner ou pas une autorisation d'accès dans lequel une clé d'accès constitué d'un support fibreux en papier, carton, ou non tissé est utilisée, comprenant les étapes suivantes :
- une caractéristique de la structure fibreuse du support fibreux est détectée sur un volume de référence du support fibreux et une signature numérique représentant la structure fibreuse du volume de référence du support fibreux est générée à partir de ladite caractéristique structurelle détectée,
- cette signature numérique est comparée selon une méthode statistique avec une donnée numérique préalablement enregistrée et une décision positive ou négative d'acceptation est émise,
- une autorisation d'accès est émise si la comparaison a permis l'émission d'une décision positive d'acceptation.

La donnée numérique préalablement enregistrée correspond à une signature numérique authentique. Toutes les variantes du procédé d'acceptation telles que décrites précédemment sont donc directement applicables au contrôle d'accès. Dans le cas d'un procédé de contrôle d'accès sécurisé, l'émission d'une décision positive d'acceptation conditionne l'autorisation d'accès. Le support fibreux peut alors être directement utilisé comme clé physique et matérielle permettant le contrôle d'accès à des locaux, des machines, des ordinateurs, des chambres d'hôtel, de l'information indexée à la signature numérique authentique. Lorsque par mise en oeuvre du procédé d'acceptation, la clé physique est acceptée, un droit d'accès ou d'entrée à un local, une machine, un ordinateur, une chambre d'hotel, est alors donné à son utilisateur. La mise en oeuvre du procédé selon l'invention, permet d'obtenir un niveau de sécurité supérieur à celui obtenu avec l'iris de l'oeil humain, meilleure caractéristique biométrique employée industriellement à ce jour.

Dans des applications visant un accès sécurisé à de l'information sensible, une base de données de signatures authentiques est générée et un lien virtuel supplémentaire associant, chaque signature numérique, à au moins une information sensible, est réalisé, par l'intermédiaire d'une base de données, de préférence sécurisée. Chaque signature numérique est donc indexée à une information sensible. Dans ce cas, l'émission d'une décision positive d'acceptation s'accompagne de l'identification de la signature numérique authentique donnant le meilleur indice de similitude, et de l'accès à l'information associée à ladite signature numérique authentique. Ce type de procédé de contrôle d'accès sécurisé trouve application dans de nombreux domaines tels que le suivi d'activités, la traçabilité, le contrôle et la sécurisation de l'information. Grâce au procédé selon l'invention, il est possible de choisir le degré de sécurité souhaité en fonction de l'application, notamment en jouant sur la complexité de la signature numérique et le seuil d'acceptation choisi. L'utilisation d'une signature « dynamique », permet l'accès à de l'information, par exemple, tant que le matériau candidat scruté est jugé authentique.

Il est également possible que les signatures numériques authentiques, enregistrées dans la base de données, ne soient pas les signatures numériques de supports fibreux différents, mais différentes signatures numériques d'un même support fibreux, permettant des niveaux d'accès différents.

Le support fibreux joue le rôle de clé d'accès et peut, entre autres formes, se présenter sous forme de cartes et être associé physiquement à une puce électronique et/ou une bande magnétique Le support peut de plus intégrer des moyens de transmission d'information ou intégrer un ou de multiples éléments mis en oeuvre dans une transmission d'information, en particulier des éléments sensibles aux radiofréquences (antennes active(s) ou passive(s) par exemple), qui assurent la communication sans contact et à distance des informations.

L'information sensible peut être structurée dans une base de donnée différente ou partagée avec la base de donnée des signatures authentiques, sécurisée ou non par tout moyen connu, totalement ou partiellement, et contenir :
- des informations sur les réglages des capteurs et de l'installation de numérisation, extraction et génération des signatures numériques (échelle, algorithmes utilisés, ...)
- des informations administratives générales (identité de personnes, codes personnels, ...)
- des informations biométriques,
- des informations en partie contenue sur le papier (imprimées ou autre),
- des informations sur d'autres papiers (signature numérique d'une enveloppe par exemple, présente conjointement à celle du papier de la lettre).

Une autre application directement visée par la présente invention est l'utilisation conjointe du procédé d'acceptation selon l'invention avec toute méthode biométrique d'identification d'un être humain, d'un animal ou d'un végétal. En effet, le procédé d'acceptation selon l'invention peut s'adapter à des plateformes informatiques développées pour la comparaison de caractéristique biométrique telles que les empreintes digitales notamment. Cette utilisation conjointe permet de résoudre des problématiques épineuses d'identification du porteur d'un document papier (carte d'accès, document d'identité...) intégrant le support fibreux authentique, conjointement avec l'authentification dudit document et d'associer ces deux identifications/authentification à de l'information concernant le porteur et/ou son document papier.

Le procédé selon l'invention pourra également être utilisé, par exemple, pour sécuriser du courrier électronique, donner des accès à distance à des informations, via un réseau de télécommunication (Internet par exemple), réaliser des signatures électroniques.

Les exemples ci-après illustrent l'invention et n'ont aucun caractère limitatif.

### EXEMPLE 1 :

On extrait d'un papier vue en transvision un signal numérique image en niveaux de gris, via une caméra CCD, sur laquelle on applique des algorithmes de filtrage (Gabor 2D, Laplacien, Passe bande FFT,...) à différentes fréquences spatiales (échelles), voire différentes directions. On effectue ces opérations pour constituer la famille de signatures « authentiques » et lors de la mise en oeuvre du procédé d'acceptation sur échantillon de papier candidat.

On peut dès lors comparer les images issues de ces algorithmes directement en niveaux de gris ou sous forme binaire, c'est-à-dire sous forme de matrices de 0 et de 1. Les signatures numériques des authentiques ou de l'échantillon candidat doivent être de préférence de même taille.

Quand il y a recours à la binarisation et au seuillage, la comparaison de cette signature numérique A de l'échantillon candidat avec les signatures numériques authentiques B de même taille est réalisée par une opération logique XOR (OU exclusif) bit à bit. Un fichier image C résultat de même taille que les signatures numériques comparées est obtenu. La phase de calcul d'indice de similitude est réalisée par le calcul de la moyenne arithmétique des bits de l'image C (distance de Hamming (DH)). Dans un tel cas, deux signatures issues d'un même papier auront une DH proche de 0, deux signatures issues de deux papiers différents, une DH proche de 0,5. Le seuil d'acceptation devra appartenir à l'intervalle ]0 ; 0,5[. Quand on compare directement les images en niveaux de gris obtenues après la phase de codage, on peut se servir de la corrélation d'images comme méthode de comparaison. Des papiers identiques auront une corrélation proche de 1, des papiers différents une corrélation proche de 0 (en positif ou négatif). Un seuil d'acceptation appartenant à ]0 ; 1 [peut être choisi comme critère de décision, en deçà duquel les papiers comparés sont considérés comme différents (imposteurs), et au delà duquel ils sont considérés comme identiques (authentiques).

Les critères de seuil d'acceptation sont donc complètement liés aux méthodes de codage et à la sélection d'un indice de similitude pour réaliser la comparaison. De plus chaque application aura des exigences sécuritaires qui détermineront des stratégies de choix des méthodes de codage, d'indices de similitudes et des seuils d'acceptation particulières.

Un double test, a été réalisé sur différentes feuilles de papier extraites d'une même fabrication (bobine mère) en scrutant l'épair des échantillons. D'abord, on a comparé les signatures numériques caractéristiques de tous les échantillons différents et on a pu bâtir, en ayant sélectionné au préalable un indice de similitude pertinent, une distribution du nombre d'échantillons en fonction de leur indice de similitude (corrélation par exemple). On a ensuite sélectionné un échantillon donné que l'on a mesuré un grand nombre de fois, induisant par la-même des erreurs opératoires de mesures, et on a pu bâtir, en utilisant le même indice de similitude, une distribution du nombre de mesures en fonction de leur indice de similitude.

Les courbes de distribution ont alors été représentées graphiquement. L'axe des abscisses correspond au facteur de similitude entre les signatures testées, l'axe des ordonnées correspond au nombre d'images à un niveau donné d'indice de similitude.

La représentation sur un même graphique des trois courbes de distribution obtenues démontre que le procédé selon l'invention permet de discriminer deux papiers différents.

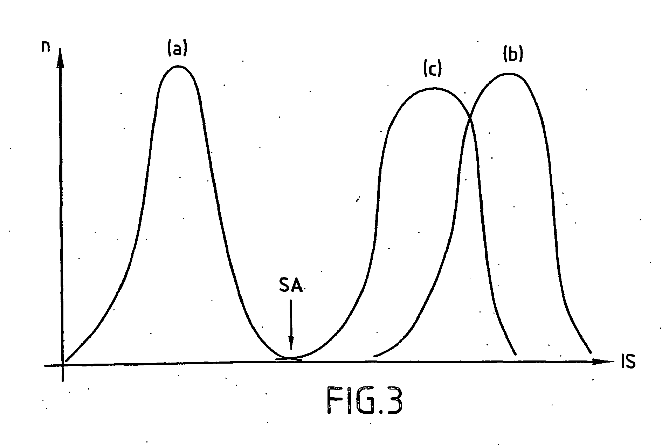

La Fig. 3 montre la variation d'une courbe de distribution obtenue en fonction de la modification volontaire ou involontaire d'un papier au cours de sa vie. La courbe (a) est la courbe de distribution des signatures numériques obtenues avec des papiers différents. La courbe (b) est la courbe de distribution des signatures numériques obtenues avec un même papier lors de différentes acquisitions.

Les signatures numériques d'un papier modifié différentes modifications (mesures successives), sont représentées sur la courbe de distribution (c) = il apparaît que cette courbe (c) est déplacée par rapport à la courbe (b) de distribution obtenue à partir du même papier (sans modification, mesures successives) et se rapproche de la courbe (a) de distribution obtenue avec des papiers différents. La courbe de distribution (c) a également tendance à s'élargir. Néanmoins, il apparaît clairement que les courbes (a) et (c) sont suffisamment éloignées pour choisir un seuil d'acceptation (SA) fiable, en deçà duquel les papiers comparés sont considérés comme identiques (le candidat est un authentique), et au delà duquel ils sont considérés comme différents. Le candidat est un imposteur. Le choix du seuil d'acceptation est déterminé en fonction de l'usage que l'on veut avoir des papiers, déterminant l'application visée. Le choix d'un seuil d'acceptation (SA) discriminant dans la zone de recouvrement impliquera obligatoirement une probabilité d'erreur quant à la reconnaissance du papier soumis au procédé selon l'invention. Ce seuil est ajusté en fonction de l'application en choisissant s'il vaut mieux faire une erreur de type rejet d'un authentique ou de type acceptation d'un imposteur et un indice de confiance de décision sera émis en fonction du seuil choisi. Dans le cas du papier, cette probabilité d'erreur est extrêmement faible. La probabilité d'erreur est inférieure à 1 sur 10¹⁵ mesures si l'on choisit le point d'intersection calculé entre les deux courbes (a) et (c) comme niveau de seuil d'acceptation et représenté Fig. 3. En pratique, le recouvrement entre ces deux courbes est quasi-nul ou extrêmement faible.

### EXEMPLE 2 :

On peut comme on l'a montré au préalable réaliser un filtrage passe-bande fréquentiel en FFT (Transformée de Fourier discrète) sur une image en transvision d'un papier, que l'on peut par la suite binariser. Pour des valeurs bien déterminées de ce filtrage passe-bande, on obtient une image binaire aléatoire, image de la structure chaotique du papier assimilable à une empreinte digitale. Les plates-formes algorithmiques spécialement créées pour la gestion de l'identification des empreintes digitales, dont les tests sont basés sur les reconnaissances de singularités dans les dessins des empreintes (minuties (orientations, courbures, position relative), centre, ... ), ont, par conséquent, été utilisées.

L'avantage de ce genre de méthode est que les aspects génération des signatures numériques, comparaison et décision d'acceptation ou de rejet du papier candidat à l'identification sont déjà présents dans lesdites plates-formes, voire combinées avec le calcul d'un indice de confiance. Les algorithmes en question sont multiples et pour la plupart très rapides dans les phases de calcul et d'interrogation de la base de données de référence. Ils possèdent de plus des gestions d'interfaces avec les scanners utilisés en reconnaissance d'empreintes digitales. Ils ont été, après de petites adaptations, utilisés sur les supports papiers.

On peut ainsi réaliser des tâches de reconnaissance du porteur d'une carte d'identité simultanément à la reconnaissance du support physique (papier) de la carte d'identité, ou bien donner le droit d'accès à un lieu, une machine, une activité ou une information si la personne est bien reconnue comme authentique et qu'elle est bien en possession du bon support fibreux (carte d'accès).

## Revendications

1. Procédé d'acceptation d'un support fibreux candidat, en papier, carton ou non tissé, en tant que support fibreux authentique, qui comprend les étapes suivantes :
- génération d'au moins une signature numérique authentique à partir d'une caractéristique structurelle extraite d'une zone de référence d'un support fibreux qualifié d'authentique, ladite signature numérique rendant compte de la structure fibreuse de la zone de référence, et enregistrement de celle-ci sur un support de données numériques,
- génération d'une signature numérique candidate à partir d'une caractéristique structurelle extraite d'une zone de référence du support fibreux candidat, ladite signature numérique rendant compte de la structure fibreuse de la zone de référence,
- comparaison de la signature numérique candidate à au moins une des signatures numériques authentiques préalablement enregistrées, de façon à émettre une décision positive ou négative d'acceptation du support fibreux candidat, **caractérisé en ce que** :
- la caractéristique structurelle du support fibreux candidat et du(es) support(s) fibreux authentique(s) est obtenue en scrutant un volume du support,
- la comparaison détermine, selon une méthode statistique, un indice de similitude entre la signature numérique candidate et la signature numérique authentique, et compare cet indice de similitude avec un seuil d'acceptation donné, choisi pour permettre l'émission d'une décision positive d'acceptation dans des cas où la signature numérique candidate ne correspond pas exactement à la signature numérique authentique avec laquelle elle est comparée.

2. Procédé d'acceptation selon la revendication 1, **caractérisé en ce que** le seuil d'acceptation est choisi pour permettre l'émission d'une décision positive d'acceptation dans des cas où le support fibreux candidat est un support fibreux authentique, dont la zone de référence a subi des modifications entre l'enregistrement de la signature numérique authentique et la génération de la signature numérique candidate.

3. Procédé d'acceptation selon la revendication 1 ou 2, **caractérisé en ce que** le support fibreux candidat est un support fibreux authentique dont la zone de référence a subi des modifications entre l'enregistrement de la signature numérique authentique ef la génération de la signature numérique candidate et **en ce qu'**une décision positive d'acceptation est émise.

4. Procédé d'acceptation selon la revendication 3, **caractérisé en ce que** le support fibreux candidat est un support fibreux authentique dont la zone de référence a subi une impression, perforation, découpe, pliage, écriture manuscrite, plastification, revêtement d'une piste magnétique, traitement de surface, coloration, imprégnation, (embossage, entre l'enregistrement de la signature numérique authentique et la génération de la signature numérique candidate.

5. Procédé d'acceptation selon la revendication 4, **caractérisé en ce que** le support fibreux candidat est un support fibreux authentique dont la zone de référence a subi une impression ou des perforations.

6. Procédé d'acceptation selon l'une des revendications 1 à 5 **caractérisé en ce que** la signature numérique candidate est générée en soumettant la caractéristique structurelle à un traitement numérique complémentaire qui diminue l'impact des modifications intervenues sur la zone de référence entre l'enregistrement de la signature numérique authentique et la génération de la signature numérique candidate.

7. Procédé d'acceptation selon la revendication 6, **caractérisé en ce que** la caractéristique structurelle numérisée est soumise à un procédé d'érosion.

8. Procédé d'acceptation selon la revendication 6 ou 7, **caractérisé en ce que** la caractéristique structurelle numérisée est soumise à un filtrage et/ou seuillage.

9. Procédé d'acceptation selon l'une des revendications 1 à 8, **caractérisé en ce que** la zone de référence du ou de(s) support(s) fibreux authentique(s) est (sont) tout ou partie d'un support fibreux vierge ou une partie vierge d'un support fibreux, et en particulier une feuille de papier vierge.

10. Procédé d'acceptation selon l'une des revendications 1 à 9, **caractérisé en ce que** la signature numérique authentique et la signature numérique candidate rendent compte de la structure chaotique, complexe, unique et quasi-invariante dans le temps de la zone de référence dont elles sont extraites.

11. Procédé d'acceptation selon l'une des revendications 1 à 10 **caractérisé en ce que** la caractéristique structurelle du(es) support(s) fibreux authentique(s) et du support fibreux candidat, détectée correspond à la porosité interne, à l'épair en transvision, ou à l'agencement tridimensionnelle du réseau fibreux à l'échelle microscopique ou macroscopique.

12. Procédé d'acceptation selon l'une des revendications 1 à 11 **caractérisé en ce que** la caractéristique structurelle du(es) support(s) fibreux authentique(s) et du support fibreux candidat est obtenue par détection de l'interaction du support fibreux avec la lumière visible, par transvision.

13. Procédé d'acceptation selon l'une des revendications 1 à 12 **caractérisé en ce que** la caractéristique structurelle du(es) support(s) fibreux authentique(s) et du support fibreux candidat est soumise à au moins un traitement analogique ou digital, choisi parmi les filtres spatiaux ou fréquentiels, par exemple passe-haut, passe-bas, passe-bande, la transformée de Fourier, les transformées dites par ondélettes, des descripteurs, les algorithmes permettant d'analyser, et/ou de transformer et /ou de réorganiser et/ou de classer et/ou de seuiller les données brutes extraites de la ou des caractéristiques structurelles, les opérations de convolutions/déconvolutions, les opérations logiques et arithmétiques entre images et/ou signaux.

14. Procédé d'acceptation selon la revendication 13 **caractérisé en ce que** la caractéristique structurelle du(es) support(s) fibreux authentique(s) et du support fibreux candidat est soumise à une transformée de Fourier d'un signal-image, par exemple à un algorithme de transformée de Fourier rapide (« FFT ») si le signal est de nature discrète, ou à une lentille de Fourier si le signal est de nature optique.

15. Procédé d'acceptation selon la revendication 1 **caractérisé en ce que** le seuil d'acceptation est choisi de façon à permettre l'émission d'une décision positive d'acceptation dans des cas où le support fibreux est un support fibreux authentique, bien que sa signature numérique ne corresponde pas exactement à la signature numérique authentique dudit support authentique à laquelle elle est comparée, à cause de différences dans les conditions d'obtention de la signature numérique, et en particulier de mesure de la caractéristique structurelle.

16. Procédé d'acceptation selon l'une des revendications 1 à 15, **caractérisé en ce que** la signature numérique candidate est comparée à plusieurs signatures numériques authentiques préalablement enregistrées dans une base de données.

17. Procédé d'acceptation selon l'une des revendications 1 à 16, **caractérisé en ce que** l'émission d'une décision positive d'acceptation s'accompagne de l'identification de la signature numérique authentique qui donne le meilleur indice de similitude.

18. Procédé d'acceptation selon l'une des revendications 1 à 17, **caractérisé en ce qu'**il comprend en outre une étape de calcul et d'émission d'un indice de confiance de la décision d'acceptation émise.

19. Procédé d'acceptation selon l'une des revendications 1 à 18, **caractérisé en ce que** les signatures numériques sont dynamiques et obtenues à partir de supports fibreux en défilement relatif à un capteur de mesure de la caractéristique structurelle.

20. Dispositif adapté pour la mise en oeuvre d'un procédé d'acceptation selon l'une des revendications 1 à 19 qui comprend :
- des moyens pour extraire par transvision une caractéristique structurelle d'une zone de référence d'un support fibreux candidat, rendant compte de la structure fibreuse de la zone de référence, qui comportent un capteur, telle qu'une caméra, CCD ou CMOS,
- des moyens de numérisation, et éventuellement de traitement/codage de la caractéristique structurelle mesurée en une signature numérique candidate,
- des moyens de calcul, selon une méthode statistique, d'un indice de similitude entre la signature numérique candidate et une signature numérique authentique préalablement enregistrée sur un support de données numériques,
- des moyens pour comparer l'indice de similitude obtenu avec un seuil d'acceptation donné, choisi pour permettre l'émission d'une décision positive d'acceptation dans des cas où la signature numérique candidate ne correspond pas exactement à la signature numérique authentique avec laquelle elle est comparée,
- des moyens d'émission de la décision d'acceptation.

21. Dispositif selon la revendication 20 caractérisé qu'il comprend des moyens de traitement par érosion et/ou filtrage et/ou seuillage.

22. Procédé pour effectuer un contrôle d'accès sécurisé et donner ou pas une autorisation d'accès dans lequel une clé d'accès constituée d'un support fibreux en papier, carton, ou non tissé est utilisée, comprenant les étapes suivantes :
- une caractéristique de la structure fibreuse du support fibreux est détectée sur un volume de référence du support fibreux et une signature numérique représentant la structure fibreuse du volume de référence du support fibreux est générée à partir de la caractéristique structurelle détectée,
- cette signature numérique est comparée selon une méthode statistique avec une donnée numérique préalablement enregistrée et une décision positive ou négative d'acceptation est émise,
- une autorisation d'accès est émise si la comparaison a permis l'émission d'une décision positive d'acceptation.

23. Procédé pour effectuer un contrôle d'accès sécurisé et donner ou pas une autorisation d'accès selon la revendication 22, **caractérisé en ce qu'**il met en oeuvre le procédé selon l'une des revendications 1 à 19, l'émission d'une décision positive d'acceptation conditionnant l'autorisation d'accès.

24. Procédé pour effectuer un contrôle d'accès sécurisé et donner ou pas une autorisation d'accès selon la revendication 22 ou 23, **caractérisé en ce qu'**une décision positive d'acceptation s'accompagne de l'émission d'une autorisation d'entrée à un local, une machine, un ordinateur, une chambre d'hôtel.

25. Procédé pour effectuer un contrôle d'accès sécurisé et donner ou pas une autorisation d'accès selon la revendication 22 ou 23, **caractérisé en ce que** la signature numérique candidate est comparée à plusieurs signatures numériques authentiques, chaque signature numérique authentique ayant été préalablement associée par indexation à une information sensible et enregistrée dans une base de données, et **en ce que** l'émission d'une décision positive d'acceptation s'accompagne de l'identification de la signature numérique authentique donnant le meilleur indice de similitude, et de l'accès à l'information associée à ladite signature numérique authentique.

## Claims

1. Method for acceptance of a candidate fibrous medium made of paper, cardboard or non-woven as an authentic fibrous medium, comprising the following steps:
- generation of at least one authentic digital signature from a structural characteristic extracted from a reference zone of an authentic fibrous medium, said digital signature representing the fibrous structure of the reference zone, and recording said digital signature on a digital data medium;
- generation of a candidate digital signature from a structural characteristic extracted from a reference zone of the candidate fibrous medium, said digital signature representing the fibrous structure of the reference zone; and
- comparison of the candidate digital signature with at least one of the previously recorded authentic digital signatures, in order to issue a positive or negative decision about acceptance of the candidate fibrous medium,
**characterized in that**:
- the structural characteristic of the candidate fibrous medium and the structural characteristic(s) of the authentic fibrous medium(a) are obtained scanning a volume of the medium; and
- the comparison uses a statistical method to determine a similarity index between the candidate digital signature and the authentic digital signature, and to compare this similarity index with a given acceptance threshold, the acceptance threshold being chosen so as to enable issuing a positive acceptance decision in cases in which the candidate digital signature does not exactly correspond to the authentic digital signature with which it is compared.

2. Acceptance method according to claim 1, **characterized in that** the acceptance threshold is chosen so as to enable issuing a positive acceptance decision in cases in which the candidate fibrous medium is an authentic fibrous medium which reference zone has been modified between the recording step of the authentic digital signature and the generation step of the candidate digital signature.

3. Acceptance method according to claim 1 or 2, **characterized in that** the candidate fibrous medium is an authentic fibrous medium which reference zone has been modified between the recording step of the authentic digital signature and the generation step of the candidate digital signature, and **in that** a positive acceptance decision is issued.

4. Acceptance method according to claim 3, **characterized in that** the candidate fibrous medium is an authentic fibrous medium which reference zone has been printed, perforated, folded, cut, hand-written, plasticized, covered with a magnetic strip, surface treated, colored, impregnated, embossed, between the recording step of the authentic digital signature and the generation step of the candidate digital signature.

5. Acceptance method according to claim 4, **characterized in that** the candidate fibrous medium is an authentic fibrous medium which reference zone has been subjected to a printing or to perforations.

6. Acceptance method according to one of claims 1 to 5, **characterized in that** the candidate digital signature is generated submitting the structural characteristic to a complementary digital processing in order to reduce the effect of modifications occurred in the reference zone between the recording step of the authentic digital signature and the generation step of the candidate digital signature,

7. Acceptance method according to claim 6, **characterized in that** the digitized structural characteristic is submitted to an erosion method.

8. Acceptance method according to claim 6 or 7, **characterized in that** the digitized structural characteristic is submitted to a filtering and/or a thresholding processing.

9. Acceptance method according to one of claims 1 to 8, **characterized in that** the reference zone of the authentic fibrous medium(a) is (are) a whole or part of a blank fibrous medium, or a blank part of a fibrous medium, and particularly a blank paper sheet.

10. Acceptance method according to one of claims 1 to 9, **characterized in that** the authentic digital signature and the candidate digital signature represent the unique, complex, chaotic and practically invariable with time structure of their respective reference zone from which they are extracted.

11. Acceptance method according to one of claims 1 to 10, **characterized in that** the structural characteristic of the authentic fibrous medium(a) and the structural characteristic of the candidate fibrous medium detected are its internal porosity, its look-through in transvision, or the three-dimensional organization of its fibrous network at a microscopic or a macroscopic scale.

12. Acceptance method according to one of claims 1 to 11, **characterized in that** the structural characteristic of the authentic fibrous medium(a) and the structural characteristic of the candidate fibrous medium are obtained by detecting the interaction between the fibrous medium and visible light, by transvision.

13. Acceptance method according to one of claims 1 to 12, **characterized in that** the structural characteristic of the authentic fibrous medium(a) and the structural characteristic of the candidate fibrous medium are submitted to at least an analog or digital treatment chosen among spatial or frequency filters, for instance high pass, low pass, passband, the Fourier Transform, socalled wavelet transforms, descriptors, the algorithms that can be used to analyze and/or transform and/or reorganize and/or sort and/or threshold the raw data extracted from the structural characteristic(s), convolution/deconvolution operations, and logical and arithmetic operations between images and/or signals.

14. Acceptance method according to claim 13, **characterized in that** the structural characteristic of the authentic fibrous medium(a) and the structural characteristic of the candidate fibrous medium considered are submitted to a Fourier transform of an image-signal, for instance using a Fast Fourier Transform (FFT) algorithm if the nature of the signal is discrete, or using a Fourier lens if the nature of the signal is optical.

15. Acceptance method according to claim 1, **characterized in that** the acceptance threshold is chosen so as to enable issuing a positive acceptance decision if the fibrous medium is an authentic fibrous medium, although its digital signature does not exactly correspond to the authentic digital signature of the said authentic medium with which it is compared, due to differences in the conditions under which the digital signature is obtained, and particularly the measurement of the structural characteristic.

16. Acceptance method according to one of claims 1 to 15, **characterized in that** the candidate digital signature is compared with several authentic digital signatures previously recorded in a database.

17. Acceptance method according to one of claims 1 to 16, **characterized in that** a positive acceptance decision will be issued accompanied by identification of the authentic digital signature that provides the best similarity index.

18. Acceptance method according to one of claims 1 to 17 **characterized in that** it also comprises a step to calculate and issue a confidence index for the issued acceptance decision.

19. Acceptance method according to one of claims 1 to 18 **characterized in that** digital signatures are dynamic and are obtained from fibrous media scrolling relatively to a sensor measuring the structural characteristic.

20. Device adapted for implementing an acceptance method according to one of claims 1 to 19 that includes:
- means of extracting by transvision a structural characteristic from a reference zone of a candidate fibrous medium, representing the fibrous structure of the reference zone, including a sensor, and particularly a CCD or CMOS camera;
- means of digitizing and possibly processing/coding the measured structural characteristic into a candidate digital signature;
- means of using a statistical method to calculate a similarity index between the candidate digital signature and an authentic digital signature previously recorded on a digital data medium;
- means of comparing the similarity index obtained with a given acceptance threshold chosen to enable issuing a positive acceptance decision in cases in which the candidate digital signature does not exactly correspond to the authentic digital signature with which it is compared; and
- means of issuing an acceptance decision.

21. Device according to claim 20, **characterized in that** it includes means for erosion and/or filtering and/or thresholding processing.

22. Method for providing secure access control and for giving or not giving an access authorization, which uses a control key constituted of a fibrous medium made of paper, cardboard or non-woven and comprising the following steps:
- a characteristic of the fibrous structure of the fibrous medium is detected on a reference volume of the fibrous medium and a digital signature representing the fibrous structure of the reference volume of the fibrous medium is generated from said detected structural characteristic;
- this digital signature is compared with a digital datum previously stored, by using a statistical method and a negative or positive decision about acceptance is issued; and
- an authorization of access is issued if the comparison allowed the issuance of a positive acceptance decision.

23. Method for providing secure access control and for giving or not giving an access authorization according to claim 22, **characterized in that** it implements the method according to one of claims 1 to 19, the access authorization only being given if a positive acceptance decision is issued.

24. Method for providing secure access control and for giving or not giving an access authorization according to claim 22 or 23, **characterized in that** the issue of a positive acceptance decision is accompanied by the issuance of an authorization of entrance in a premise, a machine, a computer, an hotel room.

25. Method for providing secure access control and for giving or not giving an access authorization according to claim 22 or 23, **characterized in that** the candidate digital signature is compared with several authentic digital signatures, each authentic digital signature having previously been associated, by indexing, with sensitive information recorded in a database, and **in that** the issue of a positive acceptance decision is accompanied by identification of the authentic digital signature with the best similarity index, and access to the information associated with the said authentic digital signature.

## Patentansprüche

1. Verfahren zur Annahme eines faserhaltigen Kandidatenträgers aus Papier, Karton oder Vlies, als echten faserhaltigen Träger, das die folgenden Schritte umfaßt:
- * Erzeugen wenigstens einer echten digitalen Signatur anhand eines aus einem Referenzbereich eines als echt bezeichneten faserhaltigen Trägers extrahierten Strukturmerkmals, wobei die digitale Signatur die Faserstruktur des Referenzbereichs wiedergibt, und deren Speichern auf einem digitalen Datenträger,
- Erzeugen einer digitalen Kandidatensignatur anhand eines aus einem Referenzbereich des faserhaltigen Kandidatenträgers extrahierten Strukturmerkmals, wobei die digitale Signatur die Faserstruktur des Referenzbereichs wiedergibt,
- Vergleichen der digitalen Kandidatensignatur mit wenigstens einer der zuvor gespeicherten echten digitalen Signaturen, um eine positive oder negative Entscheidung über die Annahme des faserhaltigen Kandidatenträgers zu treffen,
**dadurch gekennzeichnet, daß**:
- das Strukturmerkmal des faserhaltigen Kandidatenträgers und des (der) echten faserhaltigen Träger(s) durch Durchsuchen eines Raums des Trägers erhalten wird,
- der Vergleich eine Ähnlichkeitszahl zwischen der digitalen Kandidatensignatur und der echten digitalen Signatur nach einer statistischen Methode bestimmt und diese Ähnlichkeitszahl mit einer vorgegebenen Akzeptanzschwelle vergleicht, die gewählt ist, um das Treffen einer positiven Annahmeentscheidung in Fällen zu ermöglichen, in denen die digitale Kandidatensignatur nicht exakt der echten digitalen Signatur entspricht, mit der sie verglichen wird.

2. Annahmeverfahren nach Anspruch 1, **dadurch gekennzeichnet, daß** die Akzeptanzschwelle gewählt ist, um das Treffen einer positiven Annahmeentscheidung in Fällen zu ermöglichen, in denen der faserhaltige Kandidatenträger ein echter faserhaltiger Träger ist, dessen Referenzbereich zwischen der Speicherung der echten digitalen Signatur und der Erzeugung der digitalen Kandidatensignatur Änderungen erfahren hat.

3. Annahmeverfahren nach Anspruch 1 oder 2, **dadurch gekennzeichnet, daß** der faserhaltige Kandidatenträger ein echter faserhaltiger Träger ist, dessen Referenzbereich zwischen der Speicherung der echten digitalen Signatur und der Erzeugung der digitalen Kandidatensignatur Änderungen erfahren hat, und daß eine positive Annahmeentscheidung getroffen wird.

4. Annahmeverfahren nach Anspruch 3, **dadurch gekennzeichnet, daß** der faserhaltige Kandidatenträger ein echter faserhaltiger Träger ist, dessen Referenzbereich zwischen der Speicherung der echten digitalen Signatur und der Erzeugung der digitalen Kandidatensignatur einem Bedrucken, Wochen, Schneiden, Falten, Handbeschriften, Plastifizieren, Beschichten mit einer Magnetspur, Oberflächenbehandlung, Färben, Imprägnieren oder einem Prägen unterzogen wurde.

5. Annahmeverfahren nach Anspruch 4, **dadurch gekennzeichnet, daß** der faserhaltige Kandidatenträger ein echter faserhaltiger Träger ist, dessen Referenzbereich einem Bedrucken oder Lochungen unterzogen wurde.

6. Annahmeverfahren nach einem der Ansprüche 1 bis 5, **dadurch gekennzeichnet, daß** die digitale Kandidatensignatur dadurch erzeugt wird, daß das Strukturmerkmal einer ergänzenden digitalen Verarbeitung unterzogen wird, die die Auswirkung der an dem Referenzbereich zwischen der Speicherung der echten digitalen Signatur und der Erzeugung der digitalen Kandidatensignatur aufgetretenen Änderungen reduziert,

7. Annahmeverfahren nach Anspruch 6, **dadurch gekennzeichnet, daß** das digitalisierte Strukturmerkmal einem Erosionsverfahren unterzogen wird.

8. Annahmeverfahren nach Anspruch 6 oder 7, **dadurch gekennzeichnet, daß** das digitalisierte Strukturmerkmal einem Filtern und/oder Schwellenwertvergleich unterzogen wird.

9. Annahmeverfahren nach einem der Ansprüche 1 bis 8, **dadurch gekennzeichnet, daß** der Referenzbereich des oder von (der) echten faserhaltigen Trägers (Träger(n)) ein ganzer leerer faserhaltiger Träger oder ein Teil dessen oder ein leeres Teils eines faserhaltigen Trägers und insbesondere ein leerer Papierbogen ist (sind).

10. Annahmeverfahren nach einem der Ansprüche 1 bis 9, **dadurch gekennzeichnet, daß** die echte digitale Signatur und die digitale Kandidatensignatur die chaotische, komplexe, einzigartige und zeitlich quasi-unveränderliche Struktur des Referenzbereichs, aus dem sie extrahiert sind, wiedergeben.

11. Annahmeverfahren nach einem der Ansprüche 1 bis 10, **dadurch gekennzeichnet, daß** das erfaßte Strukturmerkmal des (der) echten faserhaltigen Trägers (Träger) und des faserhaltigen Kandidatenträgers der Innenporosität, der Durchsicht oder der dreidimensionalen Anordnung des Fasernetzes im mikroskopischen oder makroskopischen Maßstab entspricht.

12. Annahmeverfahren nach einem der Ansprüche 1 bis 11, **dadurch gekennzeichnet, daß** das Strukturmerkmal des (der) echten faserhaltigen Trägers (Träger) und des faserhaltigen Kandidatenträgers durch Erfassen der Wechselwirkung des faserhaltigen Trägers mit dem sichtbaren Licht mittels Durchsicht erhalten wird.

13. Annahmeverfahren nach einem der Ansprüche 1 bis 12, **dadurch gekennzeichnet, daß** das Strukturmerkmal des (der) echten faserhaltigen Trägers (Träger) und des faserhaltigen Kandidatenträgers wenigstens einer analogen oder digitalen Verarbeitung unterzogen wird, die ausgewählt ist aus den Raum- oder Frequenzfiltern, beispielsweise Hochpaß, Tiefpaß, Bandpaß, der Fourier-Transformation, den sogenannten Wavelet-Transformationen, Deskriptoren, den Algorithmen, die ermöglichen, die aus dem oder den Strukturmerkmal(en) extrahierte(n) Rohdaten zu analysieren und/oder zu transformieren und/oder zu reorganisieren und/oder zu klassifizieren und/oder einem Schwellenwertvergleich zu unterziehen, den Faltungs-/Entfaltungsoperationen, den logischen und arithmetischen Operationen zwischen Bildern und/oder Signalen.

14. Annahmeverfahren nach Anspruch 13, **dadurch gekennzeichnet, daß** das Strukturmerkmal des (der) echten faserhaltigen Trägers (Träger) und des faserhaltigen Kandidatenträgers einer Fourier-Transformation eines Bildsignals unterzogen wird, beispielsweise einem Algorithmus der schnellen Fourier-Transformation ("FFT"), wenn das Signal diskreter Natur ist, oder einer Fourierlinse, wenn das Signal optischer Natur ist.

15. Annahmeverfahren nach Anspruch 1, **dadurch gekennzeichnet, daß** die Akzeptanzschwelle gewählt ist, um das Treffen einer positiven Annahmeentscheidung in Fällen zu ermöglichen, in denen der faserhaltige Träger ein echter faserhaltiger Träger ist, obwohl seine digitale Signatur aufgrund von Unterschieden bei den Bedingungen für das Erhalten der digitalen Signatur und insbesondere für das Messen des Strukturmerkmals nicht exakt der echten digitalen Signatur des echten Trägers entspricht, mit der sie verglichen wird.

16. Annahmeverfahren nach einem der Ansprüche 1 bis 15, **dadurch gekennzeichnet, daß** die digitale Kandidatensignatur mit mehreren zuvor in einer Datenbank gespeicherten echten digitalen Signaturen verglichen wird.

17. Annahmeverfahren nach einem der Ansprüche 1 bis 16, **dadurch gekennzeichnet, daß** das Treffen einer positiven Annahmeentscheidung mit der Ermittlung der echten digitalen Signatur, die die beste Ähnlichkeitszahl liefert, verbunden ist.

18. Annahmeverfahren nach einem der Ansprüche 1 bis 17, **dadurch gekennzeichnet, daß** es ferner einen Schritt zur Berechnung und zur Lieferung einer Konfidenzzahl der getroffenen Annahmeentscheidung umfaßt.

19. Annahmeverfahren nach einem der Ansprüche 1 bis 18, **dadurch gekennzeichnet, daß** die digitalen Signaturen dynamisch sind und anhand von faserhaltigen Trägern, die an einem Sensor zum Messen des Strukturmerkmals vorbeilaufen, erhalten werden.

20. Vorrichtung, die für die Durchführung eines Annahmeverfahrens nach einem der Ansprüche 1 bis 19 ausgelegt ist, umfassend:
- Mittel zum Extrahieren, mittels Durchsicht, eines Strukturmerkmals eines Referenzbereichs eines faserhaltigen Kandidatenträgers, das die Faserstruktur des Referenzbereichs wiedergibt, die einen Sensor, wie eine CCD- oder CMOS-Kamera umfassen,
- Mittel zum Digitalisieren und eventuell zum Verarbeiten/Codieren des gemessenen Strukturmerkmals in eine digitale Kandidatensignatur,
- Mittel zum Berechnen, nach einer statistischen Methode, einer Ähnlichkeitszahl zwischen der digitalen Kandidatensignatur und einer zuvor auf einem digitalen Datenträger gespeicherten echten digitalen Signatur,
- Mittel zum Vergleichen der erhaltenen Ähnlichkeitszahl mit einer vorgegebenen Akzeptanzschwelle, die gewählt ist, um das Treffen einer positiven Annahmeentscheidung in Fällen zur ermöglichen, in denen die digitale Kandidatensignatur nicht exakt der echten digitalen Signatur entspricht, mit der sie verglichen wird,
- Mittel zum Treffen der Annahmeentscheidung.

21. Vorrichtung nach Anspruch 20, **dadurch gekennzeichnet, daß** sie Mittel zur Verarbeitung durch Erosion und/oder Filtern und/oder Schwellenwertvergleich umfaßt.

22. Verfahren zur Durchführung einer gesicherten Zugangskontrolle und zur Erteilung oder Nichterteilung einer Zugangsgenehmigung, wobei ein Zugangsschlüssel, der von einem faserhaltigen Träger aus Papier, Karton oder Vlies gebildet ist, verwendet wird, umfassend die folgenden Schritte:
- ein Merkmal der Faserstruktur des faserhaltigen Trägers wird an einem Referenzraum des faserhaltigen Trägers erfaßt, und eine digitale Signatur, welche die Faserstruktur des Referenzraums des faserhaltigen Trägers darstellt, wird anhand des erfaßten Strukturmerkmals erzeugt,
- diese digitale Signatur wird nach einer statistischen Methode mit zuvor gespeicherten digitalen Daten verglichen, und es wird eine positive oder negative Annahmeentscheidung getroffen,
- eine Zugangsgenehmigung wird erteilt, wenn der Vergleich das Treffen einer positiven Annahmeentscheidung ermöglicht hat.

23. Verfahren zur Durchführung einer gesicherten Zugangskontrolle und zur Erteilung oder Nichterteilung einer Zugangsgenehmigung, nach Anspruch 22, **dadurch gekennzeichnet, daß** es das Verfahren nach einem der Ansprüche 1 bis 19 verwendet, wobei das Treffen einer positiven Annahmeentscheidung die Zugangsgenehmigung bedingt.

24. Verfahren zur Durchführung einer gesicherten Zugangskontrolle und zur Erteilung oder Nichterteilung einer Zugangsgenehmigung, nach Anspruch 22 oder 23, **dadurch gekennzeichnet, daß** eine positive Annahmeentscheidung mit der Erteilung einer Zutrittsgenehmigung zu einer Räumlichkeit, einer Maschine, einem Computer, einem Hotelzimmer verbunden ist.

25. Verfahren zur Durchführung einer gesicherten Zugangskontrolle und zur Erteilung oder Nichterteilung einer Zugangsgenehmigung, nach Anspruch 22 oder 23, **dadurch gekennzeichnet, daß** die digitale Kandidatensignatur mit mehreren echten digitalen Signaturen verglichen wird, wobei jede echte digitale Signatur zuvor durch Indizierung einer sensiblen und in einer Datenbank gespeicherten Information zugeordnet worden ist, und das das Treffen einer positiven Annahmeentscheidung mit der Ermittlung der echten digitalen Signatur, welche die beste Ähnlichkeitszahl liefert, und mit dem Zugang zu der der echten digitalen Signatur zugeordneten Information verbunden ist.
